## Europäisches Patentamt

## European Patent Office

## Office européen des brevets

(11) Publication number: **0 349 516**

**A1**

(12) # EUROPEAN PATENT APPLICATION

(21) Application number: **89870103.2**

(51) Int. Cl.⁵: **G 06 F 15/60**

(22) Date of filing: **27.06.89**

(30) Priority: **27.06.88 EP 88870114**

(43) Date of publication of application:
**03.01.90 Bulletin 90/01**

(84) Designated Contracting States:
**AT BE CH DE ES FR GB GR IT LI LU NL SE**

(71) Applicant: **"BLIS"**
**Vuldershoek 18**
**B-3170 Herselt (BE)**

(72) Inventor: **Bellens, Willy**
**Weistraat 4**
**B-2840 Haacht (BE)**

(74) Representative: **Callewaert, Jean et al**
**Bureau Gevers S.A. rue de Livourne 7 bte 1**
**B-1050 Bruxelles (BE)**

(54) **Method and apparatus for mapping out a path of an underground conduct.**

(57) 1. A method for mapping out a path of an underground conduct said method comprises the steps of :

(a) determining a first and a second point of said conduct;

(b) determining a first parameter indicating a depth at which said conduct is located;

(c) determining a first identifier identifying said path; and wherein a digital codeword is formed comprising data for said first and second point, said first parameter and said first identifier, said codeword being stored into a memory, and wherein there is formed a header comprising a second identifier identifying a reference system and a third identifier for identifying a data format for said codeword, a set-up identifier identifying the set-up of said header being stored at a predetermined address into said memory.

Fig.4.

| IDSQ | | | | | ISC | | SPLR | | | FSC | |
|---|---|---|---|---|---|---|---|---|---|---|---|
| ID | PP | DT | R | G | P₁ | P₂ | SN | L | Δ | P₁ | P₂ |

Fig.6.

| X | Y | Z | ∅ | MAT | TP | SN | # |
|---|---|---|---|---|---|---|---|

Fig.7.

EP 0 349 516 A1

**Description**

**Method and device for mapping out a path of an underground conduct**

The present invention relates to a method for mapping out at least a part of a path of at least one conduct located in an underground, said method comprising the steps of :

(a) determining with respect to a predetermined reference system a first and a second point of said conduct ;

(b) determining a first parameter indicating a depth with respect to said predetermined reference system at which said conduct is located in said underground ;

(c) determining a first identifier identifying said path between the first and second point.

Such a method is known from the European Patent Application N° 0288578. In the known method the path of one or more conducts located in the underground is mapped out by using information obtained by scanning by means of a radar the underground. Using the reflected radar signal there can be determined for each conduct a first and a second point between which the considered conduct extends in the underground. That first and second point is than determined with respect to a predetermined reference system, which is for example a point on a building or the like. Further the depth of the considered conduct is also determined even as the path described by that considered conduct. All those information enable to form a picture of the scanned underground and thus to determine which conducts are present therein.

A drawback of the known method is that the obtained data is not adequately organized and stored. Processing of that data for example for controlling a drilling head or identifying a particular point on a particular conduct is difficult and complicated in particular with a computer, since that data is not adequately organized and stored.

It is an object of the present invention to present a method for mapping out at least a part of a path of at least one conduct located in an underground, in which method the data relating to the conduct in the soil is correctly organized and stored.

In view of the above object, a method according to the invention is characterized in that a digital codeword is formed comprising data for said first and second point, said first paramater and said first identifier, said codeword being stored into an electronically readable memory, and wherein there is formed a header comprising a second identifier identifying said predetermined reference system and a third identifier for idenfigying a data format for said codeword, a set-up identifier identifying the set-up of said header being stored at a predetermined address into said memory. The formed digital codeword can easily be stored in a memory and thus easily be processed by means of a computer, thus allowing to use that data for example for controlling the movement of a drilling head or the like. The header enables, on the one hand, to clearly identify the used reference system and thus to relate the data to known reference point and, on the other hand, indicates where the data is stored in the memory and how it is organized.

Advantageously, there is formed a second, respectively a third and fourth parameter identifying respectively the diameter, material or purpose, said second, respectively third or fourth parameter being incorporated into said codeword. The diameter, the material and/or the purpose of the conduct comprise relevant information for identifying the considered conduct.

A first preferred embodiment of a method according to the invention is characterized in that said first and second point and said first parameter are determined during the drilling of an underground passageway for said conduct. The drilled path can now immediately be converted or established by means of codewords allowing the correct storing of the parameter of the drilled path and even the correct control of the drilling head.

A second preferred embodiment of a method according to the invention is characterized in that there is determined a transformation matrix for transforming coordinates relating to said predetermined reference system into a global positioning reference system, said transformation matrix being stored at a further predetermined address of said memory. Transformation with a global positioning reference system allows a correct determination of the position of the conduct.

A third preferred embodiment of a method according to the invention is characterized in that use is made of a memory device wherein codewords according to the method as described hereabove are stored and wherein there is determined a free window for a further conduct by using the codewords stored in said memory. A path of a new conduct to be introduced into the underground can now be determined by using only the codewords and the header stored in the memory, i.e. without having to open or scan the underground beforehand.

Preferably for determining said free window there is determined around each existing conduct a protection zone, said protection zone being determined by taking into account the part of the codeword for the considered existing conduct indicating the purpose of the considered existing conduct. Security rules are thus taken into account.

The invention also relates to a device for executing the method according to the invention and to a memory wherein the header and the codewords are stored.

The invention will now be described in more details with respect to the drawings. It will be clear that the invention is not limited to the examples illustrated in the drawings and that within the scope of the invention several modifications are possible. In the drawings :

Figure 1 illustrates the presence of conducts in an underground.

Figure 2 illustrates an example of an embodiment of a device according to the invention.

Figure 3 illustrates an example of the choice of the origin of a reference system.

Figure 4 illustrates an example of the set-up of a header.

Figure 5 illustrates schematically the three main methods for forming the codewords and the codeword exchange possibilities.

Figure 6 illustrates an example of a common part of a file of codewords.

Figure 7 illustrates an example of a dedicated part of a file of codewords.

Figure 8 illustrates the determination of a free window.

Figure 9 shows a flow chart for a method for determioing a free window.

Figure 10 shows a parabola for analyzing data obtained by radar scanning.

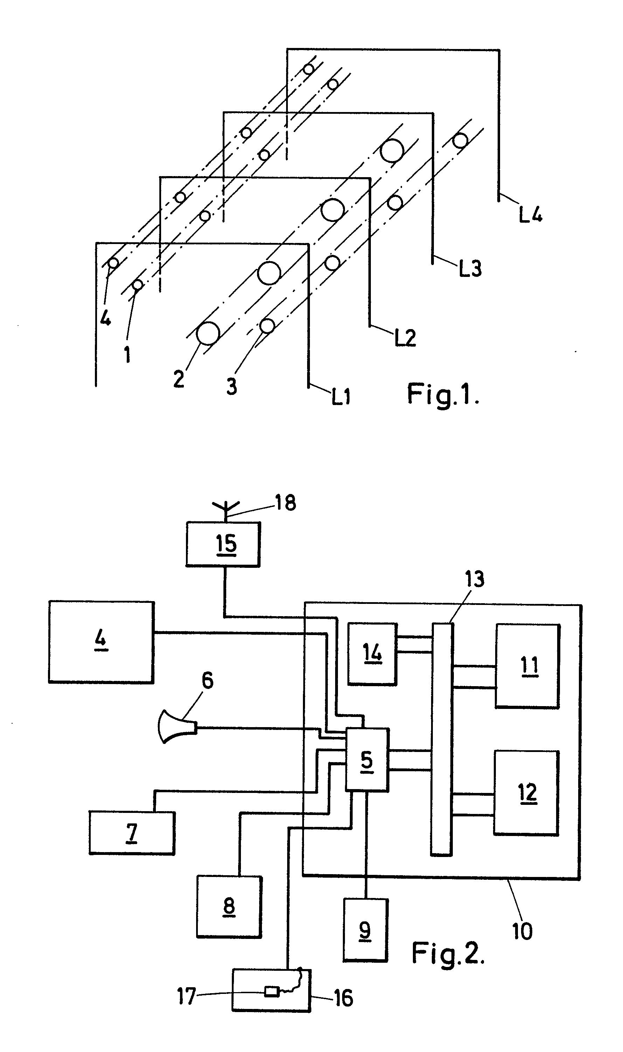

The presence of conducts in an underground is illustrated in figure 1, wherein four conducts 1,2,3 and 4 are represented. Conduct 1 is for example for electricity, while conducts 2, respectively 3 and 4 are for water respectively gas and telephone. The presence of those conducts in the underground was for example determined by scanning the underground such as described in the European Patent Application n° 0 288 578, i.e. by scanning the soil by means of a radar. The lines $L_1$, $L_2$, $L_3$ and $L_4$ represent four scanning lines for scanning the underground. But it will be clear that other methods are also applicable in order to determine the presence of objects such as conducts in the soil. The presence of those conducts could for example be determined by using information provided by the companies which have installed the conducts. However, a problem which occurs by using the latter method is that such information is often not correct especially with respect to the coordinates of the conducts in the soil.

For several reasons (insurance costs, safety, efficiency, etc..) it is necessary to have a correct picture of the objects present in the underground and also to have a reliable information which thereupon must be easily accessible for different purposes. It is therefore necessary to correctly analyze the underground and check all information relative to objects present in the underground.

Figure 2 illustrates a device according to the invention and provided for analysing an underground and mapping out the paths described by conducts present or to be introduced into that underground. The illustrated device comprises a central unit 10 which comprises a bus 13 for the transport of data and addresses. A microprocessor 11 is connected to the bus 13, even as a first respectively second memory 12 respectively 14 which is for example formed by a ROM respectively a RAM. An input/output interface 5 is also connected to the bus 13. Scanning means, such as for example a radar, are preferably connected to said input/output interface, to which there is further connected a display screen 6, for example a Cathode Ray Tube (CRT), a control keyboard 7, a mapping unit 8 and a drilling unit 9.

The mapping unit 8 comprises for example a floppy disc or CD-ROM reader and a RAM-memory. A map is stored or can be stored on a diskette or CD-ROM to be introduced in the reader. The map is stored by using codeword.

Optionally a satellite receiver 15, provided with an antenna 18, is connected to the input/output interface 5. The satellite receiver 15 is provided for receiving signals originating from the satellites emitting coordinate information (GPS, Global Positioning System) and for forming upon said received signals the coordinates of the point on earth on which said satellite receiver is situated. The operation of such a satellite receiver is for example described in the article "Navstar Global Positioning System - Ten Years later" of B.W. Parkinson and S.W. Gilbert, published in Proceedings of the I.E.[3] Vol. 71 No.10, October 1983, p. 1177-1186.

Also optionally connected to said input/output device 5 is a tablet 16 provided with an electronic mouse 17 or a light pen. The tablet is provided for directly inputting data read from a map or a draft of the conducts situated in the underground. By passing the mouse or the pen along the path of the conduct that path is introduced into the central unit 10 where it is then processed in order to be stored on a floppy disc introduced in the disc-reader 8 or to be displayed on the display unit 6. The processing of the data inputted into the central unit 10 by means of the input/output device will be described in details hereafter.

When the path of a conduct located or to be located in an underground has to be mapped out it is important to select a reference system in order to relate the coordinates of the conduct to that selected or predetermined reference system. The origin of that reference system is generally chosen in such a manner that it corresponds to a point which is easily recognized, such as for example a lamp standard or a particular point of a building. When the device is provided with a NAVSTAR-GPS receiver 15 the origin could for example be arbitrarily chosen by simply fetching the coordinates of the point corresponding with the start point of the conduct.

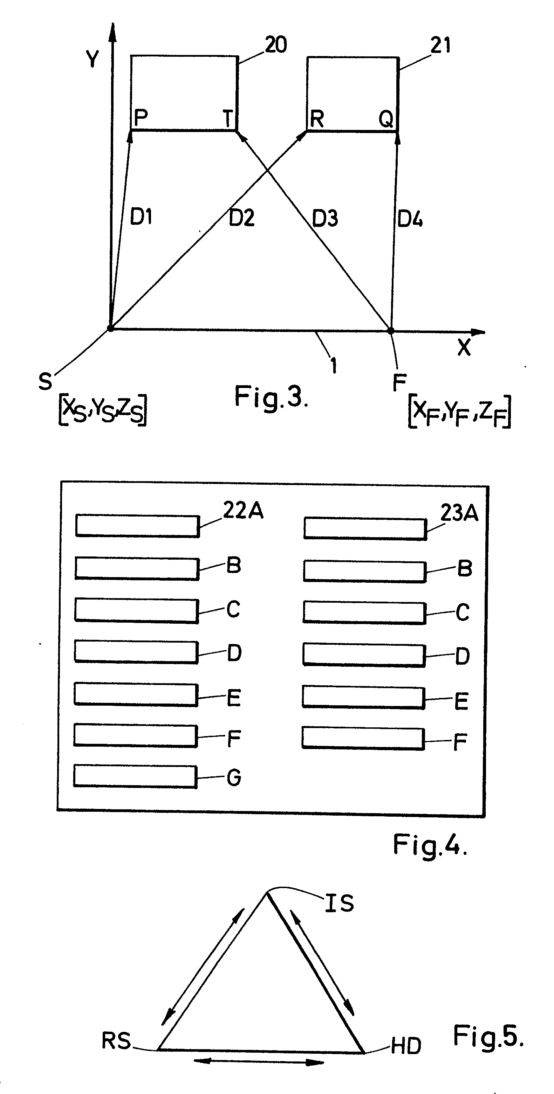

Figure 3 illustrates an example of the choice of the origin of a reference system. Suppose that a conduct 1 extends between the points S and F. The point S can be considered as the first point or start point while the point F has to be considered as the finishing point or second point of the conduct. Suppose further that in the neighbourhood of the conduct 1 there are two buildings 20 and 21. The distance $D_1$ respectively $D_2$ between the point S and the corner P respectively R of building 20 respectively 21 can now be determined, even as the distance $D_3$ respectively $D_4$ between the point F and the corner T respectively Q of building 20 respectively 21. The x-axis of the reference systems can now be determined as the axis extending between the points S and F. The origin $(X_s, Y_s, Z_s)$ of the reference system can be chosen in the point S which is now exactly determined with respect to the buildings 20 and 21. The Y-axis is then easily chosen as an axis which is perpendicular in the point S to the X-axis. The Z-axis can be chosen as an axis which in the point S is perpendicular to the plane formed by the X and Y axes of the reference system. With respect to the thus chosen reference system the point F has the coordinates $(X_F, Y_F, Z_F)$.

Once the reference system has been determined a header is formed comprising i.a. an identifier which identifies said chosen reference system. It is indeed important to memorize how the reference system was determined, in order that the data relating to the position of a conduct in the soil can be used for further processing purpose. The header comprises two main groups of data, i.e.

(a) identification data
(b) transformation data.

Figure 4 illustrates an example of the set-up of a header. The identification data comprises for example a field 22A which indicates how the data was obtained, for example by radar scanning or during a drilling process or from existing blue prints. That field 22A comprises for example a memory space for storing 10 ASCII characters. The field 22B, also for example 10 ASCII characters comprises a record number, while the field 22C (8 characters) comprises for example the data at which the information was stored into the memory. That data is for example formed by a set-up identifier identifying the set-up of the header and a series of codewords. Field 22D (25 characters) indicates for example the person or the service responsible for the supplied data, thus for example the name of the person who has realized the scanning of the soil. The location, street, town, etc., is memorized in field 22E (25 characters) while field 22F (4 characters) indicates how reliable the stored data is. A further field 22G (160 characters) is provided for further data such as for example a format identifier, identifying the data format of the stored codewords.

The transformation data comprises for example a field 23A identifying the origin $(X_S, Y_S, Z_S)$ of the predetermined reference system. That origin could be the geographical coordinates of the origin such as obtained by the NAVSTAR GPS system or simply be (0,0,0) indicating that a relative system has been used. The field 23B identifies a first and a second directional point, such as for example the points P and R of the buildings represented in figure 3. Field 23B indicates in the latter case which building it concerns and which corner on the concerned building. The field 23C indicates the distance $(D_1, D_2)$ between the origin $(X_S, Y_S, Z_S)$ and the directional points stored in field 23C. The fields 23D respectively E and F correspond to the fields 23A respectively B and C but concerns a second point such as for example the point F illustrated in figure 3. The fields 23A and D comprise for example a storage capacity for storing 6 characters while the fields 23B, C, E and F can store 12 characters.

The chosen reference system can thus be completely identified by using the header. In order to allow an easy access to the header, the header or at least the set-up identifier of the header is stored at a predetermined address in the memory which is for example formed by a floppy disc or a CD-ROM. The device can be so programmed that as soon as the memory is introduced into the device, the header or the set-up identifier is automatically addressed at its predetermined address and that the content thereof is read out and stored into the RAM memory 14 of the device.

The necessary data for mapping out at least a part of a path of a conduct located or to be located into an underground can now be obtained by several methods. Figure 5 illustrates schematically the three main methods for forming the codewords and also the codewords exchange possibilities. Those three methods are :

- Scanning of the underground (RS), preferably by using a radar.
- Using an utility information system (IS).
- Drilling a passageway (HD).

The three main methods are schematically represented at the corners of a triangle. The arrows along the sides of the triangle indicate the interaction which can be realized by using the data fetched by application of each of the methods. Each of these three main methods will now be considered separately.

A file of codewords obtained by scanning of the underground comprises a common part wherein general data concerning the scanning is stored and a dedicated part wherein data relating to the conducts present in the scanned part are stored.

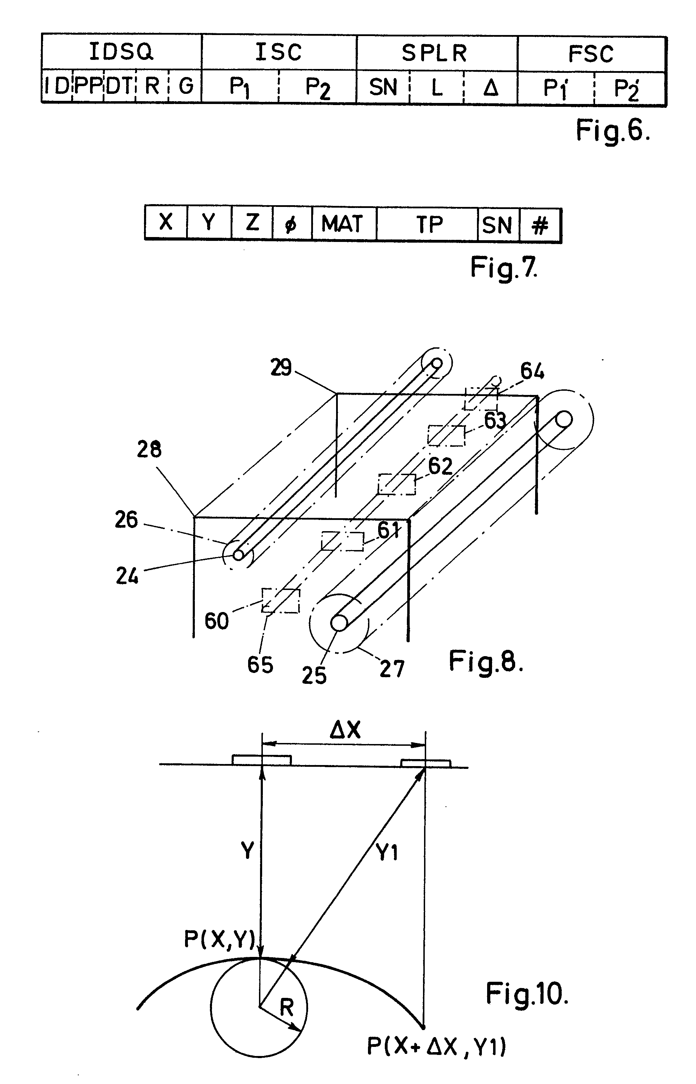

The common part of which an example is represented in figure 6 comprises :

(a) The idenditifation of the scan sequence (IDSQ)
(b) An indication of the start position of the san (ISC).
(c) The scan position in the local reference system (SPLR)
(d) An indication of the final scan position (FSC).

The part IDSQ comprises a first sub-part formed by an identification code ID which identifies how the scan was realized, for example by means of a radar. A second sub-part PP describes the scan and indicates for example the number of successive scans, the distance between each scan and the followed scan path. The sub-part DT respectively R indicates the date at which the scan was realized respectively the responsible for the scan. Finally sub-part G comprises some additional details.

The part ISC comprises a sub-part $P_1$ respectively $P_2$ indicating the coordinates X respectively Y of the first scan (LO) with respect to the predetermined reference system as stored in the header described here before.

The part SPLR comprises a first sub-part SN indicating the scan number, i.e. when several successive scans are performed such as illustrated in figure 1, the number i (1 i N) of the scan Li. A second sub-part L indicates the distance of scan i with respect to the first scan $L_1$ and measured in the X-direction of the predetermined reference system. A third part $\Delta$ indicates a deviation in Y-direction of the scan Li with respect to scan L1.

The part FSC comprises a sub-part $P_1'$ respectively $P_2'$ indicating the coordinates X respectively Y of the last scan (LN) of the series of N scans with respect to the predetermined reference system.

For each of the N scans there is thus determined a codeword as illustrated in figure 6 indicating the topographic of the scans and thus allowing to determine exactly which part of the underground has been scanned.

The data obtained by scanning the underground is analyzed as will be described in more details hereunder, and the result of that analysis is transformed in a series of codewords which are also stored in the memory, thus allowing to map out the path described by the conducts present in the scanned underground. Figure 7 illustrates an example of a dedicated part of a codeword obtained by analysis of the scan data. The sub-parts X, Y and Z indicate the coordinates of the position of the conduct. Those coordinates are of course coordinates referring to the predetermined reference system as stored in the header. In each of the sub-parts X, Y and Z there are for example reserved 10 bytes. The sub-part $\varnothing$ indicates the diameter of the conduct and occupies for example 4 bytes of memory space. The sub-part MAT, for example 15 bytes, indicates the material of which the considered conduct is manufactured. That material is for example plastic for a water conduct, copper for a telephone cable, etc. The sub-part can also indicate the thickness of the conduct wall. The sub-part TP indicates the purpose for which the conduct is used such as for example water conduct, gas conduct, valve, welding, high or low tension electricity, etc. That sub-part TP comprises for example 15 bytes. The sub-part SN indicates the scan number which is also indicated in the common part and allows thus to link the common part to the dedicated part. The sub-part # indicates the total number of conducts belonging to the scan number SN. That sub-part # thus enables to verify how many conducts there are present in that scanned part of the underground. By using the series of codewords the complete picture of the conduct between a first (start) point and a second (end) point can be obtained, for example by linking the codewords using the scan number SN.

A problem which occurs by using a scanning method is the analysis of the reflected signals. In fact.the main problems with the radar system are :
- detection of the existence of underground objects ;
- separation of the important objects (pipes, tubes, cables, etc.) and elimination of the non-important objects like stones ;
- determination of the position of the objects ;
- finding the sizes of the object (diameter) ;
- determination of the material of the object ;
- creation of the database for the mapping system, with all the necessary data inside.

Because the radar image is in fact the image of the underground reflection, for each object in the radar image their is a parabollic representation. The first step is to find this parabola within the radar image.

Mathematically it can be considered that the antenna is emitting a wave : F(t), with $O \leqq t \leqq T$, because the antenna is emitting during a time T and then it is waiting to receive the reflected signal. This reflected wave can be considered as a single sinus wave.

The underground has to be considered as a field where each point is a reflector. R(x,y) is the function describing how the material in the point (x,y) is reflecting the emitted wave. This function R(x,y) can be O, indicating that there are no reflections in that point or a positive or negative value, indicating that in that point there is a discontinuity originating reflections.

The scope is to obtain this function for all the points in the investigated area, because then a real image of the underground can be formed.

Let consider that U(x,t) is the radar image function, indicating that for each position of the antenna the reflected wave U(x,t) is received in that moment.

Let consider that the wave travelling speed in the ground is constant :
Y = s.t, s = speed of the reflected wave ;
and :
U(x,t,) = U(x,y/s) (table measured experimentally for different soil types, and different humidities).
The relation between the U(x,t,) and R(x,y) is :

$$U(x,t) = \int_{O}^{T} F(t).\ : \int_{-\infty}^{+\infty} f(\partial )R((x+y.\sin(\partial )),\ (y\cos(\partial )-t.s)).d\partial .dt\ \ ;$$

In this relation f($\partial$) is the radiation characteristic function of the antenna, and can be measured.
$\partial$ is the angle between the line from the current point to the antenna and the vertical line under the antenna.

Substituting now the original field with another one in which there is assumed that each point contains all the reflector points that the antenna can see for that position according to the directivity characteristic of the antenna. This new field is described by the function RG(x,y) :

$$RG(x,y) = \int_{-\infty}^{+\infty} f(\partial ).R((x+y.\sin(\partial )),\ (y.\cos(\partial )-t.s)).d\partial\ \ ;$$

5

then

$$U(x,t) = \int_{0}^{T} F(t) \cdot RG(x, y-t.s) \cdot dt.$$

Because all data are processed in digital form, the integrals become sums and the time t will be : $t = n.\Delta t$ ; $\Delta t$ is the time between two samples.

$$U(x, n\,\Delta t) = \sum_{i-1}^{T/\Delta t} F(i \cdot \Delta t) \cdot RG(x, y-i\,\Delta t\ s) \quad \text{or if} \quad \Delta t = 1 \text{ than}$$

$$U(x,n) = \sum_{i-1}^{T} F(i)\ RG(x, y-i\ s) \quad \text{and because } y=s\ t=s\ n => n=y/s$$

$$U(x, y/s) = \sum_{i-1}^{T} F(i)\ RG(x, y-i\ s) \quad \text{and because } y=s\ t=s\ n => n=y/s$$

Solving this system of equations the RG(x,y) function is formed. The solution will be :

$$RG(x,y) = \frac{U(x,y/s) - \sum RG(x, y-i \cdot s) \cdot F(i)}{F(0)}$$

The obtained new field RG(x,y) is the field directly obtained if use is made of a very short one-shot pulse to be emitted by the antenna. In this new field there is also the parabolic representation of the objects but now the parabolas are very clearly represented by one parabolic line and not by a parabolic band.

The next step is to examine the RG-field and to isolate each parabolas. The computer program checks the image until the first point of one parabola starting from the left top corner and going down and to the right is found and then examines the neighbours of that point to find the next point of the parabolic line, until the whole parabolic line is founded. This is illustrated in figure 10.

Having the parabolic line which is the representation of one underground object, the analysis of this line is started in order to obtain more information about the object.

The shape of the parabola gives information about the size of the object. For an object with small diameter there is a more sharper parabolic line as for an object with a greater diameter for which a more flat parabola is obtained.

P(x,y) is the top of the parabolic line and P(x+ x,y1) is another point of the parabolic line disposed at x from P.

Thus can be written :
$(y+R)^2 + \Delta x^2 - (y1+R)^2$ or

$$R = \frac{y^2 + \Delta x^2 - y1^2}{2(y1-y)}$$

R is the radius of the object ; $y = t.s$ ; $y1 = t1/s$ ;

The top point of the parabolic line must now be determined, the coordinate of that point gives the position of the object.

The amplitude of RG(x,y) in the top point gives also information about the size and the material of the object. But the amplitude is also function of the depth and of the soil type, that is the reason why a lot of experimental information in different types of soil is needed, then use can be made of RG-values correlated with the experimental data.

Because the wave reflection is associated also with a phase shift, analyzing the reflected waves gives

6

additional information about the nature of the material of the object. This research offers the possibility to distinguish a plastic object from a metal object.

In this way, the relative position of the objects, the approximate dimensions of it and some information about the material can be found.

All these relations are valid for one scan. But at present a cable cannot be distinguished from a stone. For this reason more than one scan is needed so as to check if the object is present in more than one scan approximately in the same position and then there can be established that it concerns a long object and not just a stone.

A second main method for obtaining data of a path of a conduct located in an underground is to make use of utility information system (IS), such as for example maps which are available by the different services which have installed the conducts. However it is necessary to check if those maps are reliable, for example by comparing them with the scan data, before storing them in the memory. The codewords formed by making use of that utility information system will have a comparable set-up to the one formed by using the scan data (figures 6 and 7), since for purpose of uniformity and processing facilities, it is necessary to use standard or predetermined formats for the storage of the codewords. A description of the content of a codeword obtained by using an IS is given hereunder (only the sub-parts which are different to those described with figures 6 and 7 are mentioned) :

ID : identifies the origin of the information system IS

PP : describes the number of segments in which the surface is devided

DT : indicates the date at which the information was obtained.

R : indicates the responsible for the used information system.

$P_1,P_2$: indicates the coordinates of the origin considered in the information system.

SN : indicates the segment number

$P_1',P_2'$: indicates the coordinates of the considered end point.

One can thus immediately check on the basis of the sub-part ID how the codeword was obtained. For each segment (or scan) there is thus formed a dedicated codeword and the thus formed series of codewords enables to identify the path of the conduct between a first (start) point and a second (end) point.

A third main method for obtaining data of a path of a conduct to be located in an underground is to make use of the data obtained by drilling a passageway (HD) for the conduct to be installed. When a passageway is drilled in an underground, the path of the drilling head can be monitored and thus to coordinates of the drilled passageway can be easily determined. A description of the content of a codeword obtained by using the data from the drilling of a passageway is given hereunder (only the sub-parts which are different) :

ID : identifies that the stored data have been obtained during the drilling of a passageway.

PP : describes the number of segments in which the passageway is divided.

DT : indicates the date at which the passageway was drilled.

R : indicates the responsible for the drilling.

$P_1P_2$ resp. $P_1'P_2'$ : indicates the coordinates of the startpoint resp. the endpoint of the drilling.

SN : indicates the segment number.

The dedicated part (fig. 7) can sometimes not be formed simultaneously with the common part, which is for example the case when a passageway is drilled and when the conduct is not immediately introduced after having drilled the passageway. In the latter case each of the two parts can be formed at different times.

Not only the codewords can be obtained by monitoring the drilling head during the drilling of the passageway but they could also be obtained by determining a free window for a conduct to be installed in an underground. Since the presence of conducts in an underground is known and stored in a memory by using codewords according to the invention, these codewords can now be used in order to determine a free window indicating where a new conduct can be installed in the soil. The determination of a free window has the advantage that the path of a new conduct can be easily determined without having to scan on beforehand the underground, or without blindly drilling a passageway with all risks inherent thereto.

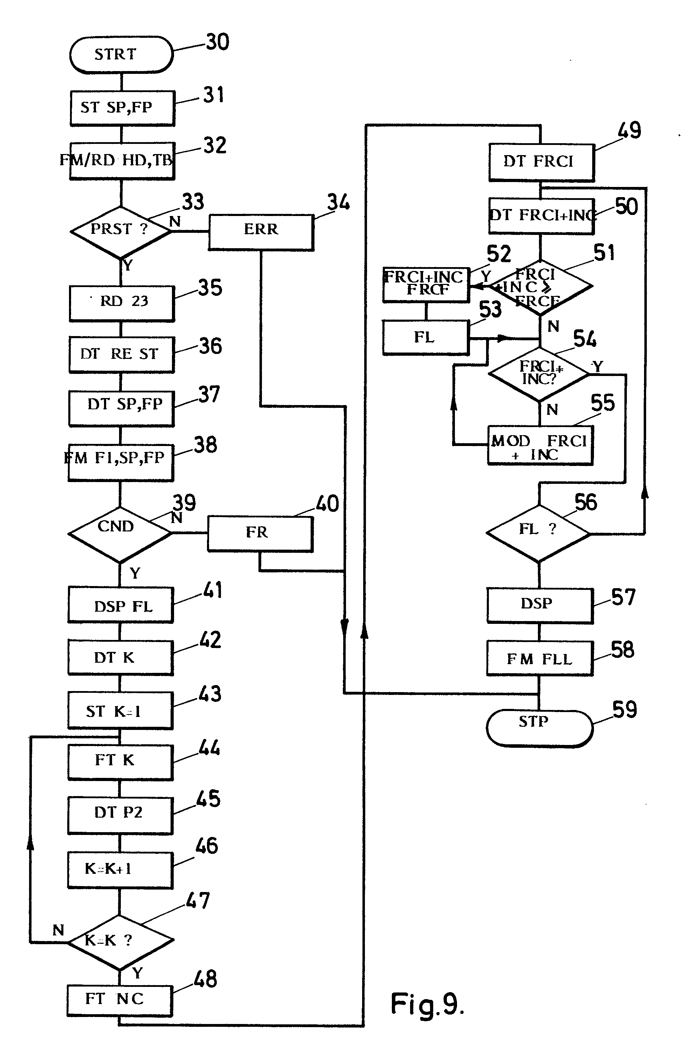

When a free window has to be determined use is now made of the stored codewords as will be described hereunder. Suppose that a conduct has to be installed between the planes 28 and 29 represented in figure 8, and that the conduct to be installed is a water conduct which will be formed by a PVC pipe with a diameter of 20 cm. Suppose further for the sake of clarity that the planes 28 and 29 are situated in a straight street. The free window is determined by using the device illustrated in figure 2 and by means of a routine stored in memory 12. The flowchart of that routine is illustrated in figure 9 and described herunder.

30 STRT : the routine is started for example by making use of the keyboard 7.

31 ST SP, FP : The planes 28, 29 i.e. the start point (SP) and the finish point (FP) of the conduct to be installed are stored in the RAM 14 (for example the name of the street)

32 FM/RD AD TB : An address is formed in order to read the header sand the field 22 of this header is thereafter read and temporarily stored into the RAM 14.

33 PRSF ? : By using the data of the header, in particular the fields 22 E and F there is verified if SP and FP are present in the memory ?

34 ERR : If SP and FP are not present in the header an error signal is generated and the routine is stopped.

35 RD 23 : The data stored in the field 23 of the header are now read and stored into RAM 14.

36 DT RFST : By using the data of field 23 the reference system is determined.

37 DT SPFP : The coordinates of the planes 28 and 29 are now determined with respect to the stored reference system.

38 FM FL SP, FP : The file of codewords indicating the conducts between the planes 28 and 29 is now searched, by using the coordinates determined in the foregoing steps, read and stored into RAM 14. All the codewords are linked to each other by the number SN allowing thus to build up an "image" by associating the different segments or scans.

39 CND ? : There is checked if there are already conducts present between the planes 28, 29. This is for example realised by checking the parts ISC and FSC of the file (figure 6).

40 FR : If no conducts are present in the considered part, then a message indicating that the underground is free is generated.

41 DSP FL : On the CRT 6 a picture is formed of all conducts present in the considered part of the underground.

42 DT K : The total number (K) of conducts present in the considered part of the soil is determined, for example by using the sub-part TP of the file.

43 ST K = 1 : A counter is initialized.

44 FT K : A conduct, which number equals the one indicated by the position of the counter is fetched.

45 DT PZ : A protection zone is calculated for the considered conduct. Indeed for each conduct there is a predetermined protection zones indicating that within that zone there may be no other conducts prsent, or even indicating a different radius for each type of other possible conduct. So a difference can for example be made when the concerned conduct is a gas conduct, so that the protection zone is larger for an electricity conduct than for a water conduct. In figure 7 the protection zone 25 and 26 are represented.

46 K = K + 1 : The counter is incremented by one unit.

47 K = K ?: There is verified if all conducts have been considered. If all conducts have not been considered there is returned to step 44.

48 FT NC : The parts $\emptyset$, MAT and TP of the conduct to be installed are now introduced.

49 DT FRC I : By taking into account the protection zone there is now determined for a first plane, for example plane 28, a set of coordinates CI indicating a free position.

50 DT FR CI + INC : An increment INC is added to the coordinates FRCI, taking into account the direction to be followed by the conduct to be installed.

51 FRCI + INC ≥ FRCF ? : There is checked if the incremented coordinates do not exceed the final point FRCF, i.e. a point situated in the plane 29.

52 FRCI + INC = FRCF : If the final point is exceeded the coordinates are mapped into the plane 29.

53 FL : A flag is set.

54 FRCI + INC ? : There is checked if the incremented coordinates still belong to a free window, i.e. if they are not within a protection zone.

55 MOD FRCI + INC : If the incremented coordinates belong to a window which is not free they are modified, for example by adapting the increment INC.

56 FL ? : There is checked if a flag was set.

57 DSP : The obtained path for the conduct to be installed is displayed.

58 FM FLL : A file indicating the formed path for the conduct is formed and stored.

59 STP : The routine is stopped.

Returning now to the example illustrated in figure 8 and using the routine described herebefore, a protection zone 26 respectively 27 is determined for the conducts 24 respectively 25. Thereafter a first free window 60 is determined in the plane 28 and there is checked if the successive free windows (61, 62, 63, 64) obtained by incrementing a coordinate of window 60 are also free. Since this is the case, a conduct 65 can now be introduced in the underground within the zone as delimited by the windows 60, 61, 62, 63 and 64. The thus obtained path for the conduct 65 can now be used for guiding the drilling head (MD) and codewords can be formed in order to store in the memory the path and the data relating to conduct 65 to be installed.

It can sometimes happen that the drilled path deviates from the calculated path, which is for example the case when a heavy stone or the like is encountered by the drilling head. In order to take into account these deviations the codewords are preferably stored after the drilling of the passageway or even after the conduct has been installed into the underground.

Several methods are applicable for determining the free window. A few examples how to determine that free window will now be given hereunder. So it is possible to determine first the minimum surface required by the conduct to be installed, i.e. the diameter of the conduct and the protection zone. The thus obtained surface can now be shifted over for example a video image representing the conducts already present and there can be verified if that surface fits in a free space. Once the path has been calculated it can be verified if the path is optimal or if better solutions are possible in order to obtain an optimal path. Since the passageway has to be drilled by means of a driling head it is favourable to take into account the bending restrictions of the drilling head in order not to obtain a path which could not be drilled by the used head.

The codewords thus offer the possibility not only to obtain a clear picture of the conducts located in the underground but also since they can easily be stored in a digital memory, processing can easily be realised thus allowing to control the movement of a drilling head or to calculate a free window.

## Claims

1. A method for mapping out at least a part of a path of at least one conduct located in an underground, said method comprises the steps of :

(a) determining with respect to a predetermined reference system a first and a second point of said conduct;

(b) determining a first parameter indicating a depth with respect to said predetermined reference system at which said conduct is located in said underground;

(c) determining a first identifier identifying said path between said first and second point;

characterized in that a digital codeword is formed comprising data for said first and second point, said first parameter and said first identifier, said codeword being stored into an electronically readable memory, and wherein there is formed a header comprising a second identifier identifying said predetermined reference system and a third identifier for identifying a data format for said codeword, a set-up identifier identifying the set-up of said header being stored at a predetermined address into said memory.

2. A method as claimed in claim 1 wherein a diameter of said conduct is determined, characterized in that there is formed a second parameter identifying said diameter, said second parameter being incorporated into said codeword.

3. A method as claimed in claim 1 or 2, wherein there is determined of which material said conduct is formed, characterized in that there is formed a third parameter identifying said material, said third parameter being incorporated into said codeword.

4. A method as claimed in claim 1, 2 or 3, wherein there is determined for which purpose said conduct is used, characterized in that there is formed a fourth parameter identifying said purpose, said fourth parameter being incorporated into said codeword.

5. A method as claimed in claim 1, 2, 3 or 4 characterized in that the date at which said conduct has been introduced into said underground is determined and that there is formed a fifth parameter identifying said date, said fifth parameter being incorporated into said code word.

6. A method as claimed in anyone of the claims 1 - 5, characterized in that there is formed a fourth identifier identifying the responsable for the introduction of said conduct into said underground, said fourth identifier being incorporated into said code word.

7. A method as claimed in anyone of the claims 1 - 6, characterized in that said first and second point and said first parameter are determined during the drilling of an underground passageway for said conduct.

8. A method as claimed in anyone of the claims 1 - 6, characterized in that said first and second point and said first parameter are determined during a scanning of the underground.

9. A method as claimed in anyone of the claims 1 - 8, characterized in that there is determined a transformation matrix for transforming coordinates relating to said predetermined reference system into a global positioning reference system, said transformation matrix being stored at a further predetermined address of said memory.

10. A memory device characterized in that there is stored therein at least one code word and a header obtained by application of the method as claimed in one of the claims 1 - 9.

11. A method for mapping out at least a part of a path of at least one further conduct to be introduced into an underground, characterized in that use is made of a memory device as claimed in claim 10 and wherein there is determined a free window for said further conduct by using the codewords stored in said memory.

12. A method as claimed in claim 11, characterized in that for determining said free window there is determined around each existing conduct a protection zone, said protection zone being determined by taking into account the part of the code word for the considered existing conduct indicating the purpose of the considered existing conduct.

13. A method as claimed in claim 12, characterized in that for determining said free window there is formed a digital codeword comprising data for a first and second point and a first parameter and that said codeword is compared with codewords representing the existing conducts and their protection zone, and that if there is an interference between the compared codewords the codeword for the free window is modified.

14. A device for executing the method as claimed in anyone of the claims 1 - 8, said device comprises a processing unit, a memory and input means for inputting data relating to said conduct, characterized in that said device comprises means for forming said digital codeword and said header and for assigning to said set-up identifier a predetermined address location.

15. A device for executing the method as claimed in anyone of the claims 11 - 13, said device comprises a processing unit, a memory and input means for inputting data relating to said conduct, characterized in that said device comprises means for determing said free window.

Fig.1.

Fig.2.

Fig.3.

Fig.4.

Fig.5.

| IDSQ | | | | | ISC | | SPLR | | | FSC | |
|---|---|---|---|---|---|---|---|---|---|---|---|
| ID | PP | DT | R | G | $P_1$ | $P_2$ | SN | L | $\Delta$ | $P_1'$ | $P_2'$ |

**Fig.6.**

| X | Y | Z | $\phi$ | MAT | TP | SN | # |
|---|---|---|---|---|---|---|---|

**Fig.7.**

**Fig.8.**

**Fig.10.**

Fig.9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 288 578 (NIPPON TELEGRAPH AND TELEPHONE CORP.) * Figure 11 * | 1 | G 06 F 15/60 |
| A | ELECTRICAL WORLD, vol. 182, no. 3, 1st August 1974, pages 80-81, New York, US; "Radar/computer system profiles underground" * Page 80, column 2, line 2 - page 81, column 1, line 32 * | 1 | |
| A | EP-A-0 246 559 (HITACHI) * Page 6, line 5 - page 7, line 18; figures 1,2 * | 1 | |

TECHNICAL FIELDS
SEARCHED (Int. Cl.5)

G 06 F
G 01 V

The present search report has been drawn up for all claims

| Place of search | Date of completion of the search | Examiner |
|---|---|---|
| THE HAGUE | 04-10-1989 | ANDERSON A.TH. |